# FASCICULE DE BREVET EUROPEEN

(11) **EP 1 173 340 B1**
(45) Date de publication et mention de la délivrance du brevet: **20.08.2008**
(21) Numéro de dépôt: 01913942.7
(22) Date de dépôt: 06.03.2001
(51) Int. Cl.: B60H 1/34

(54) **DISPOSITIF D'AERATION D'UN HABITACLE AVEC DIFFUSION DOUCE**
BELÜFTUNGVORRICHTUNG FÜR EINEN FAHRZEUGINNENRAUM MIT SANFTER VERTEILUNG
DEVICE FOR CIRCULATING AN AIR FLOW IN A PASSENGER COMPARTMENT WITH SOFT DIFFUSION

(30) Priorité: 06.03.2000 FR 0002830
(43) Date de publication de la demande: 23.01.2002
(73) Titulaire: VALEO SYSTEMES THERMIQUES, 78321 Le Mesnil St Denis Cedex (FR)
(72) Inventeur: ELLIOT, Gilles, F-91080 Courcouronnes (FR); PAUMIER, Carine, F-78000 VERSAILLES (FR); PETITJEAN, Pascale, F-78640 Neauphle le Vieux (FR); FOURY, Guillaume, F-78990 Elancourt (FR)
(74) Mandataire: Léveillé, Christophe
(86) Numéro de dépôt international: PCT/FR2001/000672
(87) Numéro de publication internationale: WO 2001/066370

(56) Documents cités:
- EP-A- 0 707 990
- EP-A- 0 713 792
- GB-A- 1 040 469
- US-A- 6 004 203

## Description

L'invention concerne un dispositif d'aération par diffusion douce particulièrement, d'un habitacle de véhicule automobile, selon le préambule de la revendication 1 connu du US-A-6004203.

L'aération à l'intérieur de l'habitacle d'un véhicule automobile se fait habituellement par de l'air pulsé à travers une pluralité de buses directionnelles. Ces installations présentent plusieurs inconvénients majeurs : ils provoquent des courants d'air, une distribution non homogène des températures, des différences thermiques entre les places avant et les places arrière du véhicule, et une sensation d'instabilité thermique. Le confort des passagers en est donc sensiblement altéré.

Pour remédier à ces problèmes, une solution dite « à diffusion douce » consiste à diffuser l'air au travers d'une surface perméable à l'air de la planche de bord. Ces surfaces s'obtiennent sous la forme de matériaux poreux, d'un grillage ou d'un grand nombre de trous transperçant une surface imperméable à l'air. Les brevets EP0 713 792, FR 2074471 ou US 1,140,469 divulguent différents modes de réalisation de structures à diffusion douce.

Cependant ces structures présentent des surfaces perméables à l'air soit trop perméables, et la vitesse d'air aux buses de diffusion d'air associées à la diffusion douce est alors trop faible, soit pas suffisamment perméables, auquel cas la perte de charge est trop élevée. Dans ces conditions, la dynamique de mise à température de l'habitacle est trop faible, si bien que le temps de mise en température du véhicule est trop élevé, ce qui nuit au confort des passagers, en particulier des passagers situés à l'arrière.

Afin de résoudre ce problème, l'invention propose de régler la vitesse de l'air en diffusion douce dans une gamme de valeurs optimisée pour permettre un nappage de l'air vers le haut de l'habitacle de façon à obtenir un air homogénéisé dans tout l'habitacle.

Plus précisément, l'invention a pour objet un dispositif d'aération par diffusion douce pour ventilation, chauffage et/ou climatisation d'un habitacle, dans lequel au maximum du débit d'air ventilé, le dimensionnement de la diffusion est réglé pour homogénéiser l'air diffusé à une vitesse comprise entre sensiblement 1 et 5 m/s, et préférentiellement entre sensiblement 2 m/s et 4 m/s en sortie de diffuseur comme défine avec les caractéristiques de la revendication 1.

Selon une forme de réalisation particulière, le dispositif consiste à combiner, au mode de diffusion douce de l'air, une aération par ventilation directive. Cette forme de réalisation permet d'avoir la possibilité d'ajouter au confort ambiant, obtenu par homogénéisation de l'air en diffusion douce, un confort supplémentaire par un apport additionnel d'air ventilé ponctuellement. De plus, afin de maîtriser le débit d'air de l'aération, il est proposé d'effectuer le réglage de ce débit au niveau central de l'aération, alors que, selon l'état de la technique, ce réglage est effectué en sortie, au niveau de chaque buse d'aération. Cela revient à régler la répartition entre diffusion douce et directive en amont des tubulures de sortie.

Dans ces conditions, la fonction d'ouverture/fermeture des aérateurs n'est plus nécessaire, ce qui simplifie la conception et la fabrication de la fonction d'aération, permettant un gain économique. De plus, la suppression du volet au niveau final de l'aération permet de libérer le design (la forme) des contraintes techniques, facilitant par exemple l'adaptation des aérateurs aux galbes du poste de conduite. Ceci a pour avantage supplémentaire de permettre un gain de place par suppression des molettes de réglage ,ainsi qu'une amélioration du niveau de bruit dans l'habitacle.

L'invention concerne ledit dispositif d'aération d'un habitacle comportant au moins un ventilateur et au moins un conduit de diffusion douce de l'air, présentant à son extrémité ouverte un panneau perméable à l'air qui assure une diffusion douce de l'air dans l'habitacle, et dans lequel, le conduit et la porosité du panneau sont dimensionnés pour que, au maximum du débit d'air ventilé, la vitesse de l'air diffusé est comprise sensiblement entre les valeurs précitées.

Le dimensionnement concerne, à vitesse de ventilation maximale, l'ouverture à l'extrémité du conduit, c'est-à-dire les dimensions du panneau et/ou la porosité de ce denier. La porosité correspond à la résistance au passage de l'air à travers le panneau. Cette résistance est conditionnée, notamment, par la dimension, la densité et/ou la forme des trous.

Selon l'invention le dispositif comporte en outre au moins un conduit d'aération, ce conduit étant dimensionné pour que, à débit d'air maximum soufflé par le ventilateur, la vitesse de l'air au niveau de buses d'aération est comprise sensiblement entre 2 m/s et 10 m/s, et préférentiellement sensiblement entre 4 m/s et 8 m/s.

Selon d'autres formes de réalisation, le dispositif, destiné à un habitacle de véhicule automobile équipé notamment d'un vitrage, comporte au moins deux conduits de diffusion d'air propres à séparer un flux d'air, provenant d'un conduit commun situé en amont, en au moins deux flux d'air secondaires pour la diffusion douce de l'habitacle et pour le dégivrage du pare-brise.

Afin de réduire les phénomènes de turbulences, limiter les déperditions thermiques et les réflexions acoustiques et donc le bruit, l'angle de sortie α1 du conduit de diffusion douce (4) par rapport à la planche de bord est avantageusement compris entre 0° et une valeur maximale α2 égale à l'angle d'inclinaison du pare-brise avec la planche de bord augmenté de 30°.

Lorsque le dispositif comporte au moins un conduit d'aération combiné au conduit de diffusion douce, ces conduits sont avantageusement dimensionnés de sorte que le débit d'air du conduit pour la diffusion douce de l'habitacle est compris entre 50% et 95% du débit du conduit commun, tandis que le débit d'air du ou des conduits pour l'aération est compris respectivement entre 50% et 5% du débit du conduit commun.

L'invention permet ainsi d'améliorer considérablement le confort des passagers par la réalisation d'une dynamique de misé à température du véhicule, d'une stabilité des températures, d'un confort thermique et d'une sensation épidermique particulière des vitesses d'air.

Selon des modes de réalisation particuliers, l'aération par ventilation directive étant effectuée par au moins deux conduits d'aération couplés au tronc commun, chaque conduit d'aération comporte un volet de réglage de débit d'air, sensiblement en amont de la sortie. Lorsque les conduits d'aération se divisent en conduits secondaires, le réglage de débit est effectué par des volets communs aux conduits secondaires en commande d'accès commun ou d'accès partagé, soit par des volets disposés à l'entrée de chaque conduit secondaire.

Dans ces conditions, un volume réduit est dédié à la fonction aérateur au regard de l'état de la technique qui prévoit des volets en extrémité des conduits d'aération. Par ailleurs, la disposition de volet en amont de la sortie d'air permet d'éviter les variations d'orientation des buses et donc du flux d'air en sortie. De plus, cette délocalisation du volet dans le conduit induit un gain acoustique appréciable.

D'autres avantages et caractéristiques apparaîtront à la lecture qui suit, relative à un mode de réalisation détaillé de l'invention, en référence aux figures annexées qui représentent, respectivement :
- la figure 1, une vue générale supérieure d'un exemple de dispositif d'aération selon l'invention ;
- la figure 2, une vue frontale du dispositif selon la figure 1;
- la figure 3, une vue en coupe schématique selon le plan II-II de la figure 2 ;
- la figure 4, une vue en coupe schématique du type illustré sur la figure 3 d'une forme particulière de réalisation de l'exemple précédent ;
- la figure 5, un diagramme des répartitions des débits d'air en fonction de l'ouverture d'un moyen de réglage de débit de flux d'air pour l'aération directe ;
- la figure 6, une vue en coupe d'une variante à diffusion douce et dégivrage du dispositif selon l'exemple précédent ;
- la figure 7, une vue en coupe selon une forme particulière de réalisation de la variante précédente ;
- la figure 8 est une vue générale d'un diffuseur de diffusion douce et de dégivrage ;
- les figures 9a à 9c, des vues supérieures partiellement arrachées de variantes d'un autre exemple de dispositif d'aération selon l'invention ;
- la figure 10, une vue schématique en coupe d'un habitacle de véhicule automobile, avec l'indication des répartitions des températures dans l'habitacle selon l'art antérieur ;
- la figure 11, un schéma selon la figure 10 avec les répartitions des températures dans l'habitacle obtenues selon le procédé de l'invention ; et
- la figure 12, un ensemble de diagrammes comparatifs entre un dispositif selon l'état de la technique et un dispositif selon l'invention concernant des critères de confort relatifs à l'aération d'un habitacle.

Sue les figures, les mêmes signes de référence désignent des éléments identiques ou équivalents en structure et en fonction.

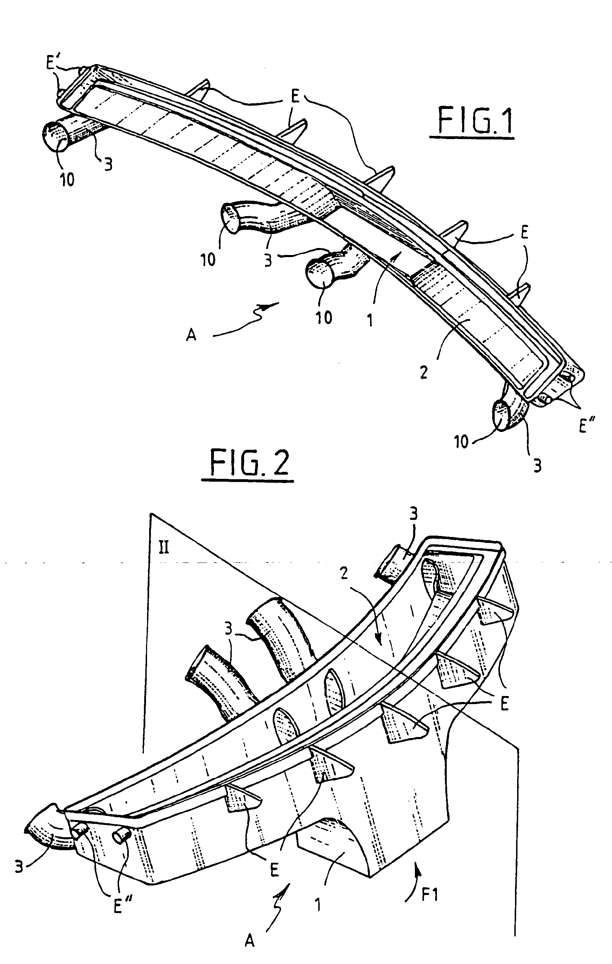

En référence en vues supérieure et frontale sur les figures 1 et 2, une planche de bord de véhicule comporte un dispositif A de ventilation, chauffage et climatisation selon l'invention comprenant un conduit commun 1 en amont, et un conduit ouvert 2 de diffusion douce de l'air dans l'habitacle du véhicule automobile. L'air, pulsé par un ventilateur (non représenté), est transmis suivant la flèche F1 du conduit commun 1 à un panneau fixé sur la partie d'ouverture sensiblement rectangulaire du conduit 2 couplé au conduit 1. Un tel panneau, perméable à l'air, est destiné à assurer une diffusion douce de l'air à l'intérieur de l'habitacle du véhicule. Des pièces de positionnement transversales E, E' du dispositif A sont réparties sur son pourtour afin de fixer ce dispositif dans un emplacement du véhicule réservé à cet effet.

L'ouverture du conduit 2 est dimensionnée en longueur et largeur pour que, à débit d'air maximal d'environ 500 kg/h soufflé par le ventilateur, la vitesse de l'air à la sortie du panneau de diffusion douce est de l'ordre de 2 m/s. Le matériau du panneau peut être également choisi en fonction de sa porosité pour permettre un ajustement supplémentaire de la vitesse de l'air dans l'intervalle défini par la présente invention, soit entre 1 et 5 m/s, de préférence entre 2 et 4 m/s. Dans ces intervalles, un bon compromis existe entre :
- d'une part le caractère non agressif, non perturbant pour la peau, de la diffusion douce, et
- d'autre part, une dynamique de mise à température du véhicule acceptable, c'est-à-dire permettant d'obtenir une température stabilisée suffisamment rapidement.

Dans ces conditions, une diffusion douce est assurée et la dynamique de mise à température du véhicule n'altère pas le confort des passagers et respecte les spécifications des constructeurs automobiles.

Selon l'exemple de réalisation illustré, le dispositif A comporte également des conduits d'aération 3 couplés au conduit commun 1, et reliés par des ouvertures d'extrémité à des buses d'aération 10. L'ouverture des conduits 3 est dimensionnée pour que, à débit d'air maximal soufflé par le ventilateur, la vitesse de l'air au niveau des buses d'aération, égale à 6 m/s dans l'exemple de réalisation, puisse être comprise entre 2 et 10 m/s, préférentiellement entre 4 et 8 m/s. Dans l'exemple illustré, la somme des aires des sections au niveau de chaque buse 10, située à l'extrémité de chacun des conduits 3, est comprise entre 0,005 m² et 0,020 m².

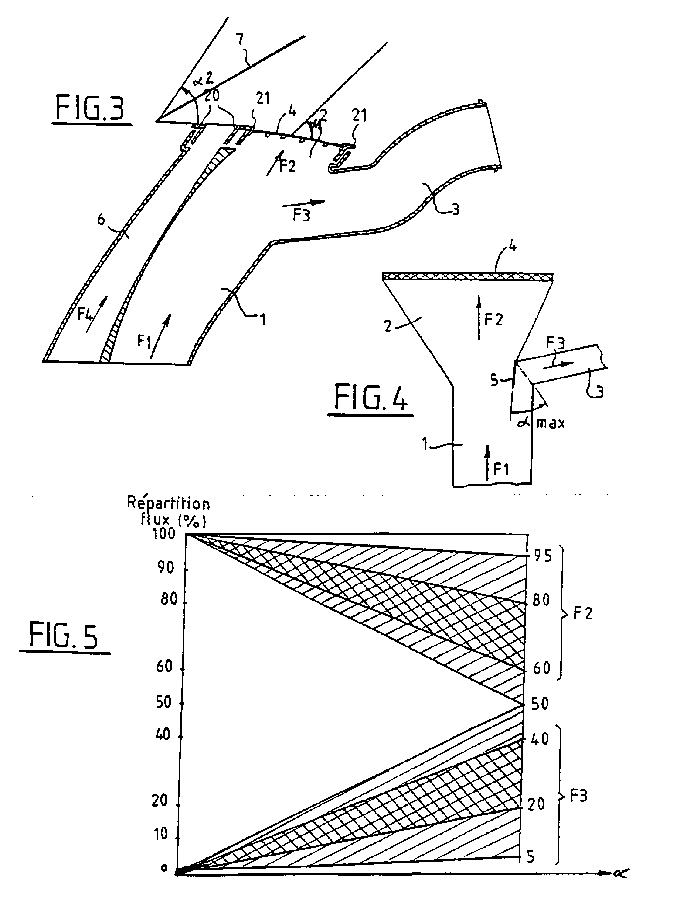

Comme illustré en coupe sur la figure 3, le conduit de diffusion douce 2, coiffé par une ouverture 21 sur laquelle est monté le panneau de diffusion 4, et le conduit d'aération 3 sont connectés de manière à séparer le flux d'air F1 provenant du conduit commun amont 1, en au moins deux flux d'air, respectivement F2 et F3. La connexion est opérée, dans l'exemple de réalisation, de sorte que le débit du flux d'air F2 du conduit 2 est environ égal à 70% du débit du flux d'air commun, c'est-à-dire compris entre 50% et 95%, préférentiellement entre 60 et 80%, tandis que le débit du flux d'air F3 est d'environ 30%, et donc compris entre 50% et 5% du débit du flux d'air F1. Le flux d'air F4 dédié au dégivrage est porté indépendamment, dans cet exemple de réalisation, par un conduit 6 coiffé par une ouverture 20.

Le réglage de la répartition des flux se fait par la dimensionnement des conduits et la géométrie de la connexion, en particulier des diamètres et de l'angle de connexion entre les deux conduits. Le dispositif peut aussi comporter un volet de répartition 5 des débits d'air des flux F2 et F3, comme illustré sur la figure 4. Le volet de répartition peut être un volet drapeau, un registre, ou tout moyen de répartition réglable et adapté. Il est commandé en position par tout moyen mécanique ou électro-mécanique connu de l'homme de l'art.

Dans la position d'angle d'ouverture maximale du volet 5, αₘₐₓ égal à 30 degrés dans l'exemple de réalisation, par rapport à la position de fermeture, positions illustrées sur la figure 4 respectivement en trait plein et en trait interrompu, la répartition des flux F2/F3 du flux F1 est la plus équilibrée. Tel qu'illustré par la figure 5, la répartition en pourcentages des flux varie linéairement en fonction de l'angle d'ouverture α compris entre 0 et αₘₐₓ, suivant les plages complémentaires de valeurs de répartition des flux, respectivement entre 100% (respectivement 0% pour F3) et 100-0%, de préférence 80-60%, pour F2 (respectivement 5-50%, de préférence 20-40%, pour F3).

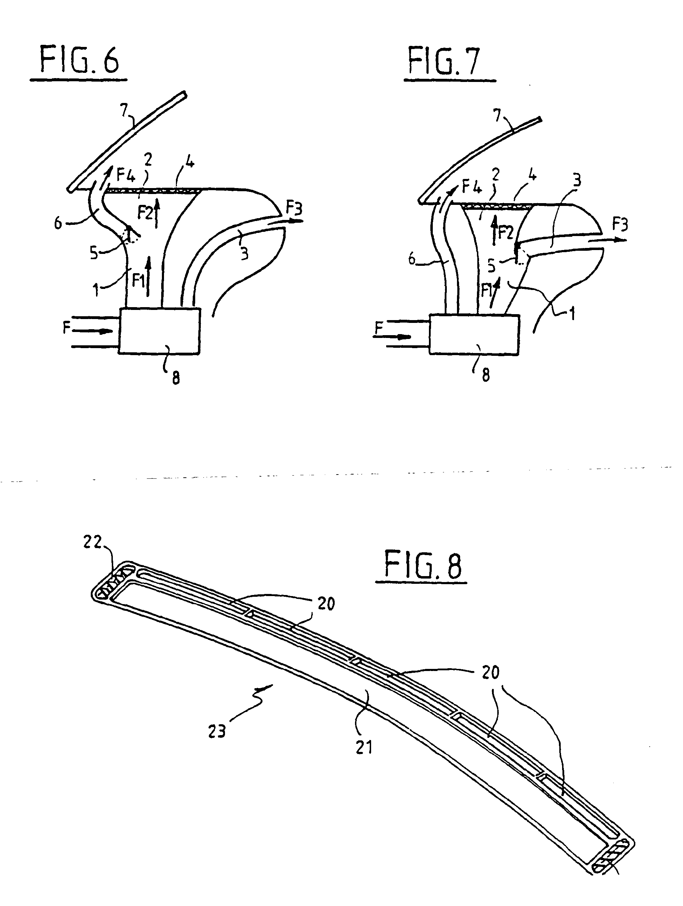

Selon des variantes de réalisation illustrées en coupe sur les figures 6 et 7, le conduit commun 1 peut être réparti par le volet 5 soit en conduits de diffusion 2 et de dégivrage 6 du pare-brise 7 (figure 6), soit en conduits de diffusion et d'aération 3. Le flux d'air commun F1 (figure 7), pulsé par le ventilateur 8 à partir de l'air extérieur ou intérieur à l'habitacle (flèche F), est ainsi utilisé pour la diffusion douce associée respectivement au dégivrage (flèche F4) ou à l'aération (flèche F3). L"angle de sortie α1 du conduit de diffusion douce (4) et donc du flux F2 par rapport à la planche de bord est compris entre 0° et une valeur maximale α2 égale à l'angle d'inclinaison du pare-brise avec la planche de bord augmenté de 30°., pour réduire les nuisances liées aux phénomènes de turbulences et de bruit.

Selon un exemple de réalisation représenté en figure 8, les ouvertures des conduits de dégivrage 20 et de diffusion douce 21 constituent un enjoliveur unique 23. En option, il comporte les diffuseurs latéraux de dégivrage des vitres 22, ou bien encore les diffuseurs des aérations latérales, les grilles de protection des haut-parleurs, ou autres accessoires.

Dans un autre exemple de réalisation, tous les conduits d'aération sont issus d'un même couplage avec le tronc commun.

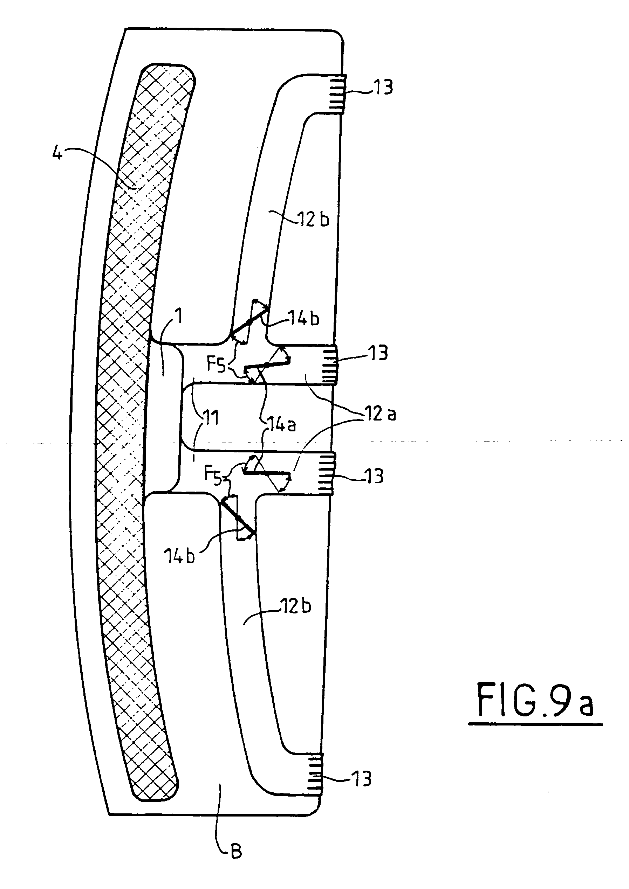

En référence à la vue partiellement arrachée illustrée en figure 9a, deux conduits centraux 11 sont couplés au tronc commun 1 à la diffusion douce, à travers le panneau 4, et à l'aération par ventilation. Dans l'exemple illustré, les conduits centraux sont divisés en conduits secondaires centraux et latéraux, 12a et 12b, dédiés respectivement à des localisations centrales et latérales de la planche de bord B. Les buses d'orientation 13 sont disposées en sortie des conduits d'aération.

La répartition du débit d'air est réglée au niveau central, c'est-à-dire, dans l'exemple illustré, par des volets 14a et 14b, disposés respectivement à l'entrée des conduits centraux et latéraux, et entraînés en pivotement selon les flèches F5 par tout moyen de command connu. Cette solution permet de régler indépendamment chaque débit d'air de chaque conduit.

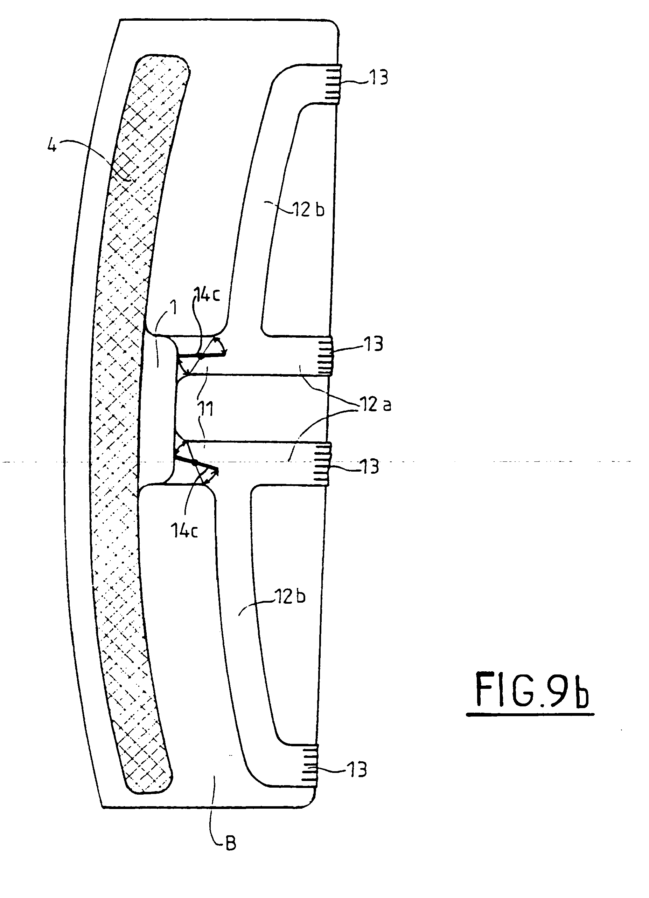

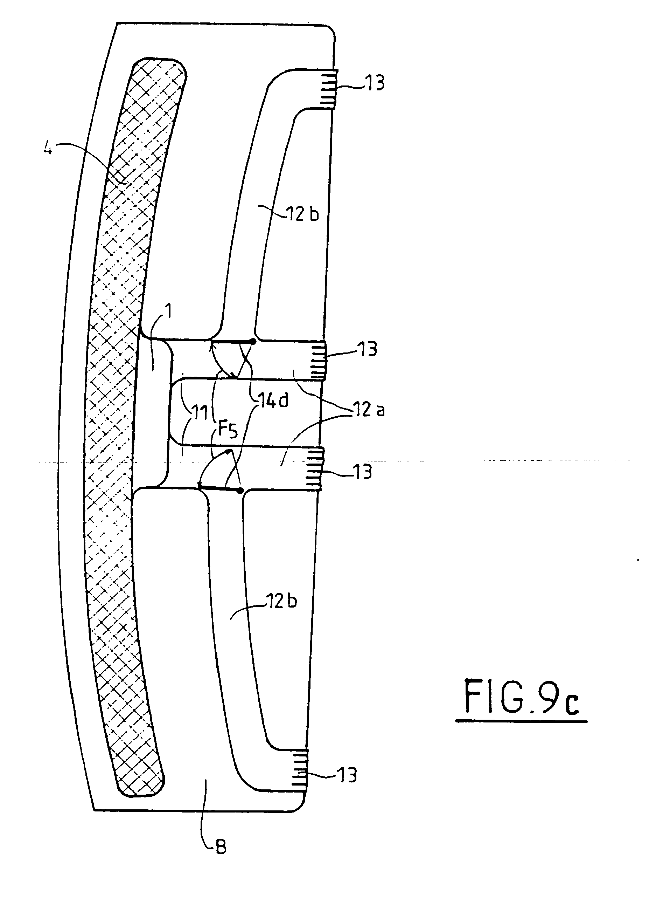

Dans les variantes illustrées en figures 9b et 9c, le réglage du débit d'air est effectué soit par des volets communs 14c disposés dans les conduits centraux 11 avant leur division en conduits secondaires 12a et 12b, c'est-à-dire en commande d'accès commun, soit par des volets communs 14d disposés en répartition complémentaire d'air au niveau de la division, c'est-à-dire en commande d'accès partagé.

Les panneaux ont une forme oblongue et s'étendent transversalement au véhicule, sur la planche de bord. Dans l'exemple de réalisation, la surface de diffusion douce du panneau perméable à l'air est inscrite sensiblement dans un rectangle de longueur égale à 1,20 m, en générale comprise entre 0,80 m et 1,60 m, et de largeur égale à 0,10 m, en général comprise entre 0,20 m et 0,03 m. Avantageusement, le dispositif comporte un unique panneau de diffusion douce de forme oblongue, de longueur comprise entre 1 m et 1,40 m et de largeur comprise entre 0,2 m et 0,03 m. L'aire de la surface de diffusion douce, qui embrasse tout ou partie du panneau, est comprise entre 0,04 m² et 0,40 m², et préférentiellement entre 0,04 m² et 0,15 m².

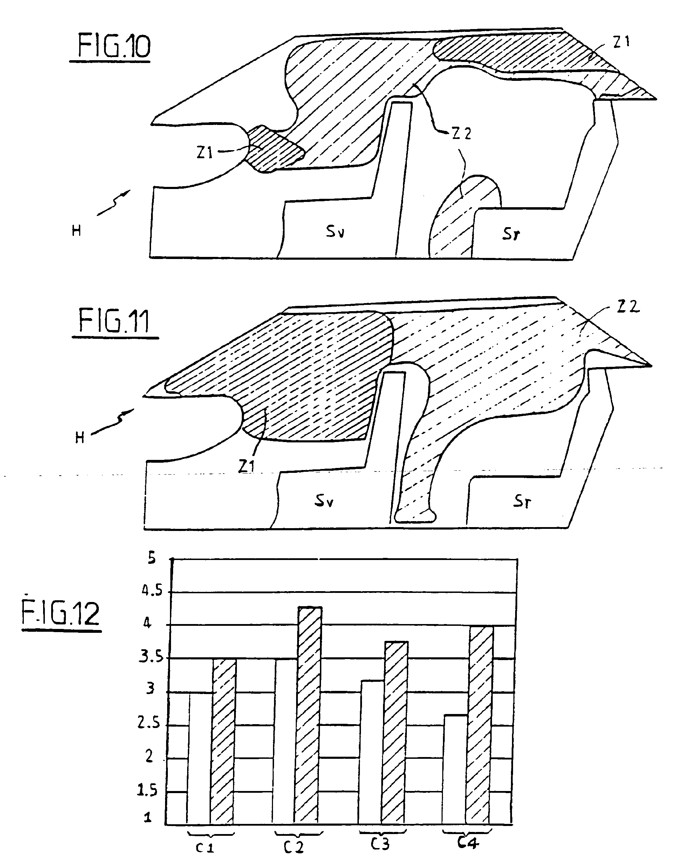

Afin d'illustrer la répartition en températures obtenue dans un habitacle de véhicule automobile, respectivement avec un dispositif d'aération selon l'état de la technique et avec le dispositif selon l'invention, les figures 10 et 11 montrent schématiquement une vue en coupe d'un tel habitacle H, avec des sièges avant Sv et arrière Sr localisant les places avant et arrière, et la carte thermique qui y règne. Il s'agit de la carte thermique de l'habitacle d'un véhicule 30 mn après la mise en fonction de la climatisation, l'ambiance étant initialement à 60°C. Les zones Z1 sont les zones les plus froides, et les zones Z2 sont des zones moyennement froides. Dans les systèmes connus, l'écart de températures entre Z1 et Z2 est d'environ 6°, tandis que l'écart de températures selon le procédé de l'invention est de l'ordre du degré.

On constate sur la figure 12 que le froid s'accumule essentiellement vers le haillon arrière, où les pertes sont importantes. Sur la figure 12, les zones froides sont sensiblement mieux réparties et plus étendues. La zone la plus froide Z1 couvre la zone avant du véhicule, et la zone moyennement froide Z2 couvre la zone arrière du véhiculé.

La figure 11 illustre des diagrammes de satisfaction sur une échelle de coefficients allant de 1 à 5, référencés par valeurs entières et moitiés, avec une diffusion douce selon le procédé de l'invention (bâtons hachurés) et selon le procédé classique (bâtons à points), de quatre critères de confort : C1, le temps de réponse ; C2, la stabilité en température ; C3, le confort thermique ; C4 le confort lié aux vitesses d'air. Il apparaît que tous les critères de confort ont un coefficient de satisfaction supérieure avec une diffusion douce selon le procédé de l'invention.

L'invention n'est pas limitée aux exemples de réalisation décrits et représentés. Il est par exemple possible de combiner des conduits de diffusion douce, de dégivrage et d'aération à partir d'un même conduit commun en utilisant des moyens de répartition de flux d'air adaptés.

Par ailleurs, la répartition des débits d'air peut être modulée en fonction de la localisation des buses d'aération, de dégivrage et des trous de diffusion, notamment en prévoyant un plus grand débit pour les zones proches des vitres du véhicule. Pour ce faire, la porosité du panneau peut également être modulée en fonction de sa localisation selon au moins une dimension du panneau, par des trous de section variable et/ou une densité de trous variable.

## Revendications

1. Dispositif d'aération d'un habitacle comportant au moins un ventilateur (8) et au moins un conduit (2) de diffusion douce de l'air, présentant à son extrémité ouverte un panneau (4) perméable à l'air qui assure une diffusion douce de l'air dans l'habitacle (H) et au moins un conduit d'aération (3) reliés par des ouvertures d'extrémité à des buses d'aération (10), **caractérisé en ce que** le conduit (2) et/ou la porosité du panneau (4) sont dimensionnés pour que, à débit d'air maximum soufflé par le ventilateur, la vitesse de l'air diffusé est comprise entre sensiblement 1 et 5 m/s, et préférentiellement entre sensiblement 2 m/s et 4 m/s,
et **en ce que** le conduit d'aération (3) est dimensionné pour que, à débit d'air maximum soufflé par le ventilateur, la vitesse de l'air au niveau des buses d'aération (10) est comprise sensiblement entre 2 m/s et 10 m/s, et préférentiellement sensiblement entre 4 m/s et 8 m/s.

2. Dispositif d'aération selon la revendication 1, **caractérisé en ce que** ledit conduit d'aération (3) et ledit conduit de diffusion douce (2) sont propres à séparer un flux d'air (F1), provenant d'un conduit commun (1) situé en amont, en au moins deux flux d'air secondaires (F2, F3) pour la diffusion douce de l'habitacle et pour l'aération de l'habitacle.

3. Dispositif d'aération selon la revendication 1, destiné à un habitacle de véhicule automobile équipé notamment d'un vitrage (7), dans lequel sont prévus au moins deux conduits (2,6) de diffusion d'air propres à séparer un flux d'air (F1), provenant d'un conduit commun (1) situé en amont, en au moins deux flux d'air secondaires (F2, F4) pour la diffusion douce de l'air dans l'habitacle et pour le dégivrage du vitrage (7).

4. Dispositif d'aération selon l'une quelconque des revendications 1 à 3, dans lequel les conduits d'air sont dimensionnés pour que le débit d'air du conduit pour la diffusion douce (2) de l'habitacle est compris entre 0% et 100% du débit du conduit commun (1), tandis que le débit d'air du ou des conduits (3) pour l'aération est compris respectivement entre 100% et 0% du débit du conduit commun (1).

5. Dispositif d'aération selon la revendication précédente, dans lequel il est prévu au moins un volet de répartition (5) des débits d'air des flux (F2, F3, F4) des conduits (2, 3, 6) de diffusion douce, d'aération et de dégivrage.

6. Dispositif d'aération selon la revendication précédente, dans lequel la répartition en pourcentages des flux varie linéairement en fonction de l'angle d'ouverture du volet (5) suivant les plages complémentaires de valeurs de répartition des flux.

7. Dispositif d'aération selon l'une quelconque des revendications 3 à 6, dans lequel l'angle de sortie α1 du conduit de diffusion douce (4) par rapport à la planche de bord est compris entre 0° et une valeur maximale α2 égale à l'angle d'inclinaison du pare-brise avec la planche de bord augmenté de 30°.

8. Dispositif d'aération selon l'une quelconque des revendications 3 à 7, dans lequel l'aération par ventilation directive étant effectuée par au moins deux conduits d'aération (11) couplés au tronc commun, chaque conduit d'aération (11) comporte un volet de réglage de débit d'air (14c) disposé dans ces conduits, sensiblement en amont de la sortie.

9. Dispositif d'aération selon la revendication 8, dans lequel les conduits d'aération (11) se divisant en conduits secondaires (12a, 12b), le réglage de débit est effectué par des volets (14c) en commande d'accès commun aux conduits secondaires.

10. Dispositif d'aération selon la revendication 8, dans lequel les conduits d'aération (11) se divisant en conduits secondaires (12a, 12b), le réglage de débit est effectué par des volets communs (14d) en commande d'accès partagé aux conduits secondaires,

11. Dispositif d'aération selon la revendication 8, dans lequel les conduits d'aération (11) se divisant en conduits secondaires (12a, 12b), le réglage de débit est effectué par des volets (14a, 14b) disposés à l'entrée de chaque conduit secondaire (12a, 12b).

12. Dispositif d'aération selon l'une quelconque des revendications 3 à 11, dans lequel l'ouverture (21) du conduit de diffusion douce constitue un enjoliveur unique (23) avec l'ouverture du conduit de dégivrage (6) et/ou avec les diffuseurs latéraux de dégivrage des vitres et/ou les grilles de protection des haut-parleurs.

13. Dispositif d'aération selon l'une quelconque des revendications précédentes, **caractérisé en ce que** la porosité du panneau est modulée en fonction de sa localisation selon au moins une dimension du panneau, par des trous de section variable et/ou une densité de trous variable.

## Claims

1. Device for ventilating a passenger compartment, comprising at least one fan (8) and at least one duct (2) for the gentle diffusion of air, having at its open end an air-permeable panel (4) which gently diffuses the air into the passenger compartment (H), and at least one ventilation duct (3) connected via end openings to ventilating nozzles (10), **characterized in that** the duct (2) and/or the porosity of the panel (4) are designed such that when the air flow through the fan is at a maximum the speed of the diffused air is between approximately 1 and 5 m/s and preferably between approximately 2 m/s and 4 m/s, and **in that** the ventilation duct (3) is designed such that when the air flow through the fan is at a maximum the speed of the air at the ventilation nozzles (10) is approximately between 2 m/s and 10 m/s and preferably approximately between 4 m/s and 8 m/s.

2. Ventilation device according to Claim 1, **characterized in that** the said ventilation duct (3.) and the said gentle diffusion duct (2) are intended to separate an air stream (F1) coming from a common upstream duct (1) into at least two secondary air streams (F2, F3) for gentle diffusion into the passenger compartment and for ventilating the passenger compartment.

3. Ventilation device according to Claim 1, for a motor-vehicle passenger compartment provided especially with glazing (7), in which at least two air diffusion ducts (2, 6) intended to separate an air stream (F1) coming from a common upstream duct (1) into at least two secondary air streams (F2, F4) for gently diffusion of the air into the passenger compartment and for deicing the glazing (7) are provided.

4. Ventilation device according to any one of Claims 1 to 3, in which the air ducts are designed such that the air flow through the duct (2) for gently diffusion into the passenger compartment is between 0% and 100% of the flow through the common duct (1), whereas the air flow through the ventilation duct(s) (3) is respectively between 100% and 0% of the flow through the common duct (1).

5. Ventilation device according to the preceding claim, in which at least one flap (5) for distributing the air flows of the streams (F2, F3, F4) through the ducts (2, 3, 6) for gentle diffusion, ventilation and deicing is provided.

6. Ventilation device according to the preceding claim, in which the percentage distribution of the streams varies linearly depending on the opening angle of the flap (5) through complementary ranges of values for the distribution of the streams.

7. Ventilation device according to any one of Claims 3 to 6, in which the outlet angle α1 of the gentle diffusion duct (4) with respect to the dashboard is between 0° and a maximum value α2 equal to the angle of inclination of the windscreen to the dashboard plus 30°.

8. Ventilation device according to any one of Claims 3 to 7, in which, with guided ventilation being carried out by at least two ventilation ducts (11) connected to the common shaft, each ventilation duct (11) has a flap (14c) for regulating the air flow provided in these ducts, substantially upstream of the outlet.

9. Ventilation device according to Claim 8, in which, with the ventilation ducts (11) being divided into secondary ducts (12a, 12b), flow regulation is carried out by flaps (14c) for controlling access to both of the secondary ducts.

10. Ventilation device according to Claim 8, in which, when the ventilation ducts (11) are divided into secondary ducts (12a, 12b), flow regulation is carried out by common flaps (14d) for controlling separate access to the secondary ducts.

11. Ventilation device according to Claim 8, in which, when the ventilation ducts (11) are divided into secondary ducts (12a, 12b), flow regulation is carried out by flaps (14a, 14b) provided at the entrance to each secondary duct (12a, 12b).

12. Ventilation device according to any one of Claims 3 to 11, in which the opening (21) of the gentle diffusion duct consists of a single decorative strip (23) with the opening of the deicing duct (6) and/or with the lateral diffusers for deicing the windows and/or the grilles for protecting the loudspeakers.

13. Ventilation device according to any one of the preceding claims, **characterized in that** the porosity of the panel is varied depending on its location along at least one direction of the panel, by holes of variable cross section and/or a variable density of the holes.

## Patentansprüche

1. Vorrichtung zur Belüftung eines Innenraums mit mindestens einem Gebläse (8) und mindestens einem Kanal (2) zur sanften Verteilung der Luft, die an ihrem offenen Ende eine luftdurchlässige Platte (4), die für eine sanfte Verteilung der Luft im Innenraum (H) sorgt, sowie mindestens einen Belüftungskanal (3) aufweist, der über Endöffnungen mit Belüftungsdüsen (10) verbunden ist, **dadurch gekennzeichnet, dass** der Kanal (2) und/oder die Porosität der Platte (4) so bemessen sind, dass die Geschwindigkeit der verteilten Luft bei maximaler vom Gebläse eingeblasener Luftmenge im Wesentlichen zwischen 1 und 5 m/s und vorzugsweise im Wesentlichen zwischen 2 m/s und 4 m/s liegt,
und dass der Belüftungskanal (3) so bemessen ist, dass die Geschwindigkeit der Luft an den Belüftungsdüsen (10) bei maximaler vom Gebläse eingeblasener Luftmenge im Wesentlichen zwischen 2 m/s und 10 m/s und vorzugsweise im Wesentlichen zwischen 4 m/s und 8 m/s liegt.

2. Belüftungsvorrichtung nach Anspruch 1, **dadurch gekennzeichnet, dass** der Belüftungskanal (3) und der Kanal (2) zur sanften Verteilung geeignet sind, einen von einem gemeinsamen stromaufwärtigen Kanal (1) kommenden Luftstrom (F1) in mindestens zwei sekundäre Luftströme (F2, F3) aufzuteilen, um die Luft sanft im Innenraum zu verteilen und den Innenraum zu belüften.

3. Belüftungsvorrichtung nach Anspruch 1, die für einen besonders mit einer Verglasung (7) ausgestatteten Kraftfahrzeuginnenraum bestimmt ist und in der mindestens zwei Luftverteilungskanäle (2, 6) vorgesehen sind, die geeignet sind, einen von einem gemeinsamen stromaufwärtigen Kanal (1) kommenden Luftstrom (F1) in mindestens zwei sekundäre Luftströme (F2, F4) aufzuteilen, um die Luft sanft im Innenraum zu verteilen und die Verglasung (7) zu enteisen.

4. Belüftungsvorrichtung nach einem der Ansprüche 1 bis 3, wobei die Luftkanäle so bemessen sind, dass die Luftmenge des Kanals (2) zur sanften Verteilung von Luft im Innenraum zwischen 0% und 100% der Menge des gemeinsamen Kanals (1) beträgt, während die Luftmenge des oder der Belüftungskanäle (3) jeweils zwischen 100% und 0% der Menge des gemeinsamen Kanals (1) beträgt.

5. Belüftungsvorrichtung nach dem vorhergehenden Anspruch, wobei mindestens eine Klappe (5) zur Verteilung der Luftmengen der Ströme (F2, F3, F4) des Kanals zur sanften Verteilung, des Belüftungs- und des Enteisungskanals (2, 3, 6) vorgesehen ist.

6. Belüftungsvorrichtung nach dem vorhergehenden Anspruch, wobei die prozentuale Verteilung der Ströme linear in Abhängigkeit vom Öffnungswinkel der Klappe (5) gemäß den komplementären Verteilungswertbereichen der Ströme variiert.

7. Belüftungsvorrichtung nach einem der Ansprüche 3 bis 6, wobei der Ausgangswinkel α1 des Kanals (4) zur sanften Verteilung bezüglich des Armaturenbretts zwischen 0° und einem Höchstwert α2 liegt, der dem Neigungswinkel der Windschutzscheibe zum Armaturenbrett vermehrt um 30° entspricht.

8. Belüftungsvorrichtung nach einem der Ansprüche 3 bis 7, wobei die Belüftung durch gerichtete Ventilation über mindestens zwei an den gemeinsamen Kanal gekoppelte Belüftungskanäle (11) erfolgt, wobei jeder Belüftungskanal (11) eine Luftmengenregelungsklappe (14c) aufweist, die im Wesentlichen stromaufwärts vom Ausgang in diesen Kanälen angeordnet ist.

9. Belüftungsvorrichtung nach Anspruch 8, wobei, da sich die Belüftungskanäle (11) in sekundäre Kanäle (12a, 12b) aufteilen, die Mengenregelung durch Klappen (14c) erfolgt, die den gemeinsamen zugriff auf die sekundären Kanäle steuern.

10. Belüftungsvorrichtung nach Anspruch 8, wobei, da sich die Belüftungskanäle (11) in sekundäre Kanäle (12a, 12b) aufteilen, die Mengenregelung durch gemeinsame Klappen (14d) erfolgt, die den getrennten zugriff auf die sekundären Kanäle steuern.

11. Belüftungsvorrichtung nach Anspruch 8, wobei, da sich die Belüftungskanäle (11) in sekundäre Kanäle (12a, 12b) aufteilen, die Mengenregelung durch am Eingang jedes sekundären Kanals (12a, 12b) angeordnete Klappen (14a, 14b) erfolgt.

12. Belüftungsvorrichtung nach einem der Ansprüche 3 bis 11, wobei die Öffnung (21) des Kanals zur sanften Verteilung eine einzige Zierleiste (23) mit der Öffnung des Enteisungskanals (6) und/oder mit den seitlichen Verteilern zur Enteisung der Scheiben und/oder den Schutzgittern der Lautsprecher darstellt.

13. Belüftungsvorrichtung nach einem der vorhergehenden Ansprüche, **dadurch gekennzeichnet, dass** die Porosität der Platte in Abhängigkeit von ihrem Ort in mindestens einer Abmessung der Platte durch Löcher mit variablem Querschnitt und/oder eine variable Löcherdichte moduliert ist.
